# EUROPEAN PATENT APPLICATION

(11) **EP 1 197 877 A1**
(43) Date of publication of application: **17.04.2002**
(21) Application number: 00440274.9
(22) Date of filing: 13.10.2000
(51) Int. Cl.: G06F 17/30

(54) **Terminal, and network-unit, and method, and computer program product**

(71) Applicant: ALCATEL, 75008 Paris (FR)
(72) Inventor: Peters, Marco, 4617 NS Bergen Op Zoom, Noord-Brabant (NL); Gillet, Fernand, 1180 Bruxelles (BE)
(74) Representative: van Bommel, Jan Peter

(57) **Abstract**

Known wired/wireless terminals for browsing an internet/intranet and comprising a browser function running via a processor and a memory for said browsing and comprising a man-machine-interface for controlling said browser function sometimes completely block (browser-hang-up situation), which can only be changed by switching said terminal off and on. By providing said terminal with a generator for generating an overrule signal for overruling said browser function, in case a browser-hang-up situation appears, there is no longer a need to switch said terminal off and on. Possibly, said overruling is done in combination with amending said browsing in response to a response signal originating from a network-unit. Preferably, said overruling and/or said amending comprises a generation of a previous address signal, and/or a reset of said browser function, and/or a finish of said browser function.

## Description

The invention relates to a terminal comprising a processor and a memory and comprising a browser function running via said processor and said memory for browsing a network and comprising a man-machine-interface for controlling said browser function.

Such a terminal is known in general, like a fixed terminal for wired communication (PSTN, ISDN etc.) or a wireless (cordless) terminal (DECT etc.) or a wireless (mobile) terminal (GSM, UMTS etc.). Said browser function is a standard browser function (for for example fixed terminals) or a special browser function (like a WAP browser function for for example GSM terminals).

Such a terminal is disadvantageous, inter alia, due to said browser function sometimes completely blocking (browser-hang-up situation), which can only be changed by switching said terminal off and on.

It is an object of the invention, inter alia, to provide a terminal described in the preamble, which is available at any time (for example for making emergency calls), even in case of said browser function being completely blocked.

Thereto, the terminal according to the invention is characterised in that said terminal comprises a generator for generating an overrule signal for overruling said browser function.

By introducing the possible overruling of said browser function, it is no longer necessary to switch the terminal off and on. As a result the time for starting a processor and for memory checks etc. is no longer lost for solving the browser-hang-up problem. In case said overruling takes place without any interaction from any network, the browser-hang-up problem is solved most rapidly, which is an advantage.

The generator could be coupled to the man-machine-interface directly or indirectly for generating the overrule signal in response to a user action (for example after a user has found out about the browser-hang-up situation), and could be coupled to a detector for detecting said browser-hang-up situation (by for example detecting the terminal not reacting to a user action), in which case the detector could be coupled to the man-machine-interface directly or indirectly and said generator could then be coupled indirectly to said man-machine-interface via said detector, and for automatically generating said overrule signal for example.

The invention is based on the insight, inter alia, that especially in telecommunication terminals certain basic functions (like making an emergency call) should be available at any time.

The invention solves the problem, inter alia, of said browser-hang-up situation making said terminal unavailable for a too long period.

A first embodiment of the terminal according to the invention is characterised in that said terminal comprises a transmitter for in response to said overrule signal transmitting an information signal to a network-unit, with said network-unit comprising a sender for in response to said information signal sending a response signal to said terminal for amending said browsing.

By introducing the transmitter in the terminal and the sender in the network-unit (like a switch, a router, a bridge etc.) said overruling is done via a network and by amending said browsing. In this case the overruling takes place after the network has been informed and under control of this network, which is an advantage.

A second embodiment of the terminal according to the invention is characterised in that said overruling and/or said amending comprises a generation of a previous address signal.

By using the generation of a previous address signal for overruling and/or amending, the browser function will return to the previous (last) address signal (the last URL and/or the last IP-address before the hang-up started).

A third embodiment of the terminal according to the invention is characterised in that said overruling and/or said amending comprises a reset of said browser function.

By using the reset of said browser function, like for example the start page of the browser function, for overruling and/or amending, the browser function will return to the start page (the start URL and/or the start IP-address).

A fourth embodiment of the terminal according to the invention is characterised in that said overruling and/or said amending comprises a finish of said browser function.

By using the finish of the browser function for overruling and/or amending, the browser function will be finished, after which the terminal is available immediately for for example emergency calls.

The invention further relates to a network-unit for use in combination with a terminal comprising a processor and a memory and comprising a browser function running via said processor and said memory for browsing a network and comprising a man-machine-interface for controlling said browser function.

The network-unit according to the invention is characterised in that said terminal comprises a generator for generating an overrule signal for overruling said browser function and comprises a transmitter for in response to said overrule signal transmitting an information signal to said network-unit, with said network-unit comprising a sender for in response to said information signal sending a response signal to said terminal for amending said browsing.

A first embodiment of the network-unit according to the invention is characterised in that said overruling and/or said amending comprises a generation of a previous address signal.

A second embodiment of the network-unit according to the invention is characterised in that said overruling and/or said amending comprises a reset of said browser function.

A third embodiment of the network-unit according to the invention is characterised in that said overruling and/or said amending comprises a finish of said browser function.

The invention yet further relates to a method for use in combination with a terminal comprising a processor and a memory and comprising a browser function running via said processor and said memory for browsing a network and comprising a man-machine-interface for controlling said browser function.

The method according to the invention is characterised in that said method comprises a step of generating an overrule signal for overruling said browser function.

Embodiments of the method according to the invention correspond with embodiments of the terminal according to the invention.

The invention also relates to a computer program product for performing a browser function in a terminal comprising a processor and a memory for running said browser function for browsing a network and comprising a man-machine-interface for controlling said browser function.

The computer program product according to the invention is characterised in that said computer program product comprises a generator function for generating an overrule function for overruling said browser function.

Embodiments of the computer program product according to the invention correspond with embodiments of the terminal according to the invention.

US 5,761,280 discloses a telephone web browser arrangement and method, and US 6,061,700 discloses an apparatus and method for formatting a web page, neither one of these documents discloses the terminal according to the invention, the network-unit according to the invention, the method according to the invention or the computer program product according to the invention.

The invention will be further explained at the hand of an embodiment described with respect to drawings, whereby
figure 1 discloses a terminal according to the invention and a network-unit according to the invention, and
figure 2 discloses a flow chart illustrating a method according to the invention and a computer program product according to the invention.

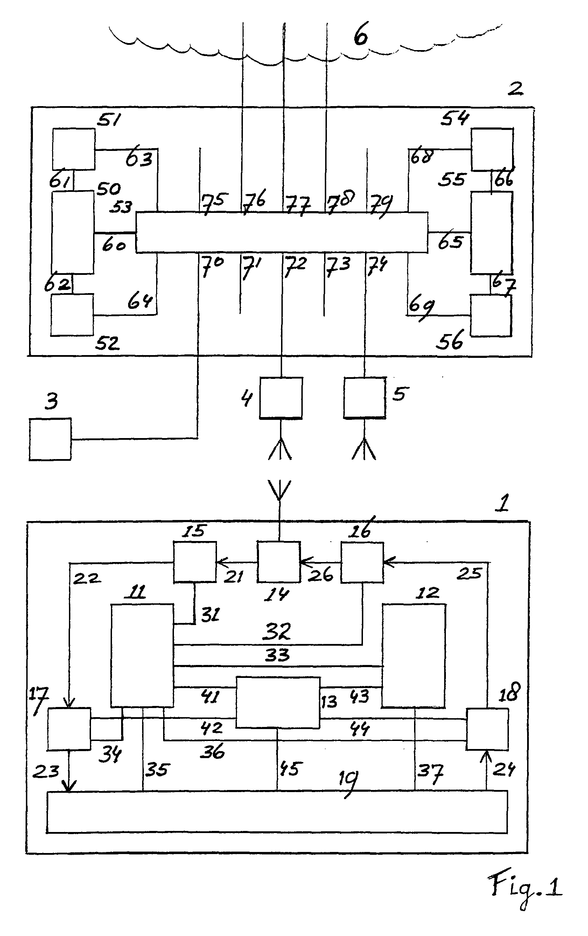

Terminal 1 according to the invention as shown in figure 1 comprises a processor 11, a memory 12, a generator 13, a transceiver 14, a receiving circuit 15, a decoder 17, a transmitting circuit 16, a coder 18, and a man-machine-interface 19 or mmi 19 (like for example a keyboard, mouse, loudspeaker, microphone, display, touchscreen etc.). An in/output of transceiver 14 is coupled to an antennae, an output of transceiver 14 is coupled via a connection 21 to an input of receiving circuit 15, of which an output is coupled via a connection 22 to an input of decoder 17. An in/output of receiving circuit 15 is coupled via a control connection 31 to a first in/output of processor 11. An output of decoder 17 is coupled via a connection 23 to an input of mmi 19 and a first in/output of decoder 17 is coupled via a control connection 34 to a second in/output of processor 11 and a second in/output of decoder 17 is coupled via a control connection 42 to a first in/output of generator 13. An output of mmi 19 is coupled via a connection 24 to an input of coder 18, of which an output is coupled via a connection 25 to an input of transmitting circuit 16. A first in/output of coder 18 is coupled via a control connection 36 to a third in/output of processor 11 and a second in/output of coder 18 is coupled via a control connection 44 to a second in/output of generator 13. An output of transmitting circuit 16 is coupled via a connection 26 to an input of transceiver 14. An in/output of transmitting circuit 16 is coupled via a control connection 32 to a fourth in/output of processor 11. A third in/output of generator 13 is coupled via a control connection 41 to a fifth in/output of processor 11 and a fourth in/output of generator 13 is coupled to a first in/output of memory 12. A fifth in/output of generator 13 is coupled via a control connection to a first in/output of mmi 19. A sixth in/output of processor 11 is coupled via a control connection 33 to a second in/output of memory 12 and a seventh in/output of processor 11 is coupled via a control connection 35 to a second in/output of mmi 19. A third in/output of memory 12 is coupled via a control connection 37 to a third in/output of mmi 19.

Network-unit 2 according to the invention as shown in figure 1 comprises a processor 50, a receiver 51, a sender 52, a coupler 53, a first unit 54, a memory 55 and a second unit 56. Processor 50 is coupled via a control connection 60 to coupler 53 and via a control connection 61 to receiver 51 and via a control connection 62 to sender 52. Receiver 51 is coupled via a control connection 63 to coupler 53, and sender 52 is coupled via a control connection 64 to coupler 53. Memory 55 is coupled via a control connection 65 to coupler 53 and via a control connection 66 to first unit 54 and via a control connection 67 to second unit 56. First unit 54 is coupled via a control connection 68 to coupler 53, and second unit 56 is coupled via a control connection 69 to coupler 53. Coupler 53 is coupled via a connection 70 to a fixed, wired terminal 3, and is coupled via a connection 72 to basestation 4 for wireless (mobile, cordless etc.) communication with terminal 1, and is coupled via connection 74 to a basestation 5, and is coupled via connections 76, 77 and 78 to an I-net 6 (intranet, internet etc.).

The terminal 1 according to the invention and the network-unit 2 according to the invention as shown in figure 1 function as follows.

According to a first embodiment, a user is surfing I-net 6. Via mmi 19, said user enters an I-net-address, by clicking on a link or entering/typing an IP-address or URL. In case of having clicked on a link, under control of processor 11, location information is supplied via control connection 37 to memory 12, which in response generates a corresponding I-net-address signal which for example via control connection 33 and processor 11 and control connection 32 is supplied to transmitting circuit 16, or which corresponding I-net-address signal for example via control connection 37 and mmi 19 and connection 24 and coder 18 and connection 25 is supplied to transmitting circuit 16. In case of having entered/typed an IP-address or URL, the corresponding I-net-address signal is supplied via connection 24 and coder 18 and connection 25 to transmitting circuit 16. Via connection 26 and transceiver 14 said corresponding I-net-address signal is transmitted via basestation 4 and connection 72 and coupler 53 and control connection 63 to receiver 51 in network-unit 2. Via control connection 61, processor 50 is informed, which controls coupler 53 in such a way that said corresponding I-net-address signal is supplied to I-net 6 for example via connection 76. In response, I-net 6 generates a corresponding page signal (for example an HTML-page or WAP-page), which page signal for example via connection 78 and coupler 53 and control connection 63 is supplied to receiver 51 in network-unit 2. Via control connection 61, processor 50 is informed, which controls coupler 53 in such a way that said corresponding page signal is supplied to transceiver 14 in terminal 1 via connection 72 and basestation 4. Via connection 21 receiving circuit 15 receives said corresponding page signal, which via connection 22 and decoder 17 and connection 23 is supplied to mmi 19, where it is displayed. Via control connection 31, processor 11 is informed and for example via control connection 33 (a part of) said page signal is supplied to memory 12, or for example via control connection 37 (a part of) said page signal is supplied to memory 12, where it is stored.

Necessary for said surfing is a browser function, which is installed by storing browser software in memory 12, which browser software runs via processor 11. The installment usually is done once, for example after having manufactured the terminal or the first time the I-net is visited (when being on-line) by downloading such browser software, after which the browser software can be updated during on-line sessions.

Unfortunately, this browser software sometimes blocks completely, resulting in a browser-hang-up situation. Due to processor 11 and memory 12 being involved, the terminal can then no longer be used, neither for surfing nor for making phone calls, because of processor 11 and memory 12 being crucial. According to prior art, the only way to solve this browser-hang-up problem is to switch the terminal off and on, which of course is a disadvantageous solution, due to wasting time when starting up, due to basestation 4 losing contact etc.

According to the invention, terminal 1 is provided with generator 13, which according to said first embodiment, receives a user signal via control connection 45 from mmi 19 entered by said user (by pressing a certain special key or a special combination of keys etc.) who has found out about the browser-hang-up problem. In response to said user signal, generator 13 generates for example a memory-address signal (overrule signal), which for example via control connection 43 is supplied to memory 12. In response memory 12 generates for example an I-net-address signal, like the first I-net-address signal always used (start page) or the last (previous) I-net-address signal used before the browser-hang-up situation occurred, or a specific I-net-address signal for example predefined by said user. This I-net-addresss signal signal is for example supplied via control connection 33 and processor 11 and control connection 32 to transmitting circuit 16, or is for example supplied via control connection 37 and mmi 19 and connection 24 and coder 18 and connection 25 is supplied to transmitting circuit 16, etc.

So, in case said browser-hang-up situation for example is caused due to processor 11 and memory 12 being in a loop or for example is caused due to processor 11 being unable to address memory 12, the introduction of generator 13 for pushing a memory address signal into memory 12 will solve the browser-hang-up problem (generally said pushing via connection 43 will result in an information exchange between memory 12 and processor 11 via connection 33 in response to which processor 11 generally will be able to address memory 12 again).

According to a second embodiment, a user is surfing I-net 6, etc. and said corresponding I-net-address signal is transmitted via basestation 4 and connection 72 and coupler 53 and control connection 63 to receiver 51 in network-unit 2, etc. and said corresponding page signal is sent back and displayed/stored.

According to the invention, terminal 1 is provided with generator 13, which according to said second embodiment, receives a user signal via control connection 45 from mmi 19 entered by said user (by pressing a certain special key or a special combination of keys etc.) who has found out about the browser-hang-up problem. In response to said user signal, generator 13 generates for example a processor control signal (overrule signal), which for example via control connection 41 is supplied to processor 11. In response processor 11 for example performs a check (for example by running small further software stored at a further location in memory 12) and/or generates a predefined memory address signal which is supplied via control connection 33 to memory 12, which in response generates a predefined I-net-address signal etc.

So, in case said browser-hang-up situation for example is caused due to processor 11 and memory 12 being in a loop or for example is caused due to processor 11 being unable to address memory 12, the introduction of generator 13 for pushing a processor control signal into processor 11 will solve the browser-hang-up problem.

According to a third embodiment, a user is surfing I-net 6, etc. and said corresponding I-net-address signal is transmitted via basestation 4 and connection 72 and coupler 53 and control connection 63 to receiver 51 in network-unit 2, etc. and said corresponding page signal is sent back and displayed/stored. Again, terminal 1 is provided with generator 13, which according to said third embodiment, receives a user signal via control connection 45 from mmi 19 entered by said user (by pressing a certain special key or a special combination of keys etc.) who has found out about the browser-hang-up problem. In response to said user signal, generator 13 generates for example a network signal (overrule signal), which for example via control connection 44 is supplied to coder 18, which converts this network signal into an information signal and supplies it via connection 26 and transmitting circuit 16 and connection 26 to transceiver 14, which transmits it via basestation 4 and connection 72 and coupler 53 and control connection 63 to receiver 51 in network-unit 2. Via control connection 61, processor 50 is informed, which via control connection 62 controls sender 52 in such a way that in response to said information signal a response signal is generated and sent via control connection 64 and coupler 53 to transceiver 14 in terminal 1 via connection 72 and basestation 4. Via connection 21 receiving circuit 15 receives said response signal, which either via control connection 31 is supplied to processor 11 which then informs generator 13 (first alternative) or via connection 22 and decoder 17 and control connection 34 is supplied to processor 11 which then informs generator 13 (second alternative) or via connection 22 and decoder 17 and control connection 42 is supplied to generator 13 (third alternative), which in response may generate for example said memory address signal and/or said processor control signal etc. In response processor 11 for example performs a check (for example by running small further software stored at a further location in memory 12) and/or generates a predefined memory address signal which is supplied via control connection 33 to memory 12, which in response generates a predefined I-net-address signal etc.

According to a fourth embodiment, terminal 1 comprises a detector for detecting a browser-hang-up situation, for example by detecting terminal 1 no longer responding to a user action via mmi 19 and/or terminal 1 no longer responding to signals received from network-unit 2. Such a detector could for example be a comparator for comparing signals and/or a timer for establishing an elapse of a time-interval, and maybe located for example in receiving circuit 15 (first alternative) and/or decoder 17 (second alternative) and/or processor 11 (third alternative) and/or generator 13 (fourth alternative). When located in receiving circuit 15, said detector will inform generator 13 via control connection 31 and processor 11 and control connection 41, and when located in decoder 17, said detector will inform generator 13 via control connection 42, and when located in processor 11, said detector will inform generator 13 via control connection 41. Of course, preferably, said detector will be located in/near generator 13, to prevent said browser-hang-up problem also blocking this detector. Said detector informing generator 13 is in addition to or for replacing said user signal.

Instead of one memory 12, there could be several memories, one or more further memories for example being located in/near processor 11, then generator 13 is either able to communicate with all memories or just communicates with one or more specific memories, whatever is necessary for solving the browser-hang-up problem.

All embodiments are just embodiments and do not exclude other embodiments not shown and/or described. All alternatives are just alternatives and do not exclude other alternatives not shown and/or described. Each (part of an) embodiment and/or each (part of an) alternative can be combined with any other (part of an) embodiment and/or any other (part of an) alternative. Terms like "in response to K" and "in dependence of L" and "for doing M" do not exclude that there could be a further "in response to N" and a further "in dependence of O" and a further "for doing P" etc.

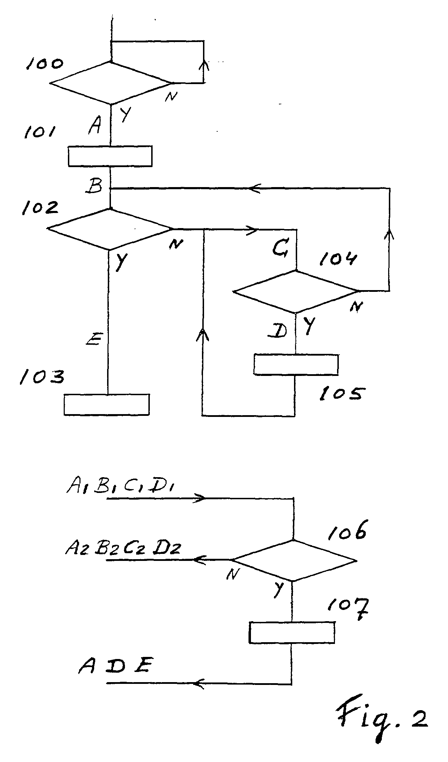

The flow chart as shown in figure 2 comprises the following blocks:
-- 100 -- Activate browser? Yes, go further to 101 (via A), no, go back to 100.
-- 101 -- Generate IP-address, go further to 102 (via B).
-- 102 -- Finish browser? Yes, go further to 103 (via E), no, go further to 104 (via C).
-- 103 -- Finish browser.
-- 104 -- Is there a next IP-address? Yes, go further to 105 (via D), no, go back to 102 (via B).
-- 105 -- Generate next IP-address, go back to 104 (via C).
-- 106 -- From A1, or B1, or C1, or D1: Is there a browser-hang-up problem? Yes, go further to 107, no, go back to A2, or B2, or C2, or D2.
-- 107 -- Generate overrule signal, go back/further to A1, or A2, or D1, or D2, or E.

The method according to the invention and/or the computer program product according to the invention as illustrated at the hand of the flow chart in figure 2 functions as follows. When using the terminal, it is checked whether a user wants to go surfing (-- 100 -- Activate browser? Yes, go further to 101, no, go back to 100). If yes, a start IP-address is generated (-- 101 -- Generate IP-address, go further to 102). Then it is checked whether the browser needs to be closed (-- 102 -- Finish browser? Yes, go further to 103, no, go further to 104). If yes, the browser is finished (-- 103 -- Finish browser), if not, it is checked whether a next IP-address is to be generated (-- 104 -- Is there a next IP-address? Yes, go further to 105, no, go back to 102). If yes, the next IP-address is generated (-- 105 -- Generate next IP-address, go back to 104) etc., if no, it is checked whether the browser needs to be closed, etc.

To solve a possible browser-hang-up problem, according to the invention, at location A between 100 and 101, and/or at location B between 101 and 102, and/or at location C between 102 and 104, and/or at location D between 104 and 105, the flow chart is cut resulting in A1 and A2, and/or B1 and B2, and/or C1 and C2, and/or D1 and D2. Then from A1, and/or B1, and/or C1, and/or D1, and one or more sub flow charts (comprising blocks 106 and 107) is/are inserted: firstly it is checked at location A and/or B and/or C and/or D whether there is a browser-hang-up problem (-- 106 -- From A1, or B1, or C1, or D1: Is there a browser-hang-up problem? Yes, go further to 107, no, go back to A2, or B2, or C2, or D2). If yes, an overrule signal is generated (-- 107 -- Generate overrule signal, go back/further to A1, or A2, or D1, or D2, or E), after which a start IP-address (A1,A2) or a next IP-address (D1,D2) is to be generated or the session is to be finished (E).

## Claims

1. Terminal comprising a processor and a memory and comprising a browser function running via said processor and said memory for browsing a network and comprising a man-machine-interface for controlling said browser function, **characterised in that** said terminal comprises a generator for generating an overrule signal for overruling said browser function.

2. Terminal according to claim 1, **characterised in that** said terminal comprises a transmitter for in response to said overrule signal transmitting an information signal to a network-unit, with said network-unit comprising a sender for in response to said information signal sending a response signal to said terminal for amending said browsing.

3. Terminal according to claim 1 or 2, **characterised in that** said overruling and/or said amending comprises a generation of a previous address signal.

4. Terminal according to claim 1 or 2, **characterised in that** said overruling and/or said amending comprises a reset of said browser function.

5. Terminal according to claim 1 or 2, **characterised in that** said overruling and/or said amending comprises a finish of said browser function.

6. Network-unit for use in combination with a terminal comprising a processor and a memory and comprising a browser function running via said processor and said memory for browsing a network and comprising a man-machine-interface for controlling said browser function, **characterised in that** said terminal comprises a generator for generating an overrule signal for overruling said browser function and comprises a transmitter for in response to said overrule signal transmitting an information signal to said network-unit, with said network-unit comprising a sender for in response to said information signal sending a response signal to said terminal for amending said browsing.

7. Network-unit according to claim 6, **characterised in that** said overruling and/or said amending comprises a generation of a previous address signal.

8. Network-unit according to claim 7, **characterised in that** said overruling and/or said amending comprises a reset of said browser function.

9. Method for use in combination with a terminal comprising a processor and a memory and comprising a browser function running via said processor and said memory for browsing a network and comprising a man-machine-interface for controlling said browser function, **characterised in that** said method comprises a step of generating an overrule signal for overruling said browser function.

10. Computer program product for performing a browser function in a terminal comprising a processor and a memory for running said browser function for browsing a network and comprising a man-machine-interface for controlling said browser function, **characterised in that** said computer program product comprises a generator function for generating an overrule function for overruling said browser function.
